Europäisches Patentamt

(19) European Patent Office

Office européen des brevets

(11) EP 0 797 349 B1

(12) EUROPEAN PATENT SPECIFICATION

(45) Date of publication and mention
of the grant of the patent:
**07.05.2003 Bulletin 2003/19**

(51) Int Cl.⁷: **H04N 1/41**, H04N 7/30

(21) Application number: **96306904.2**

(22) Date of filing: **23.09.1996**

(54) **Signal adaptive postprocessing system for reducing blocking effects and ringing noise**

Signaladaptives Nachverarbeitungssystem um Blockierungseffekte und Ringstörungen zu verringern

System de posttraitement à signal adaptatif pour réduire des effets de blockage et de bruit de cercles

(84) Designated Contracting States:
**DE FR GB**

(30) Priority: **23.03.1996 KR 9608041**

(43) Date of publication of application:
**24.09.1997 Bulletin 1997/39**

(73) Proprietor: **Samsung Electronics Co., Ltd.**
**Suwon City, Kyungki-do (KR)**

(72) Inventors:
• **Lee, Yung-Lyul**
**Songpa-gu, Seoul (KR)**
• **Park, Hyun-Wook**
**Tongdaemun-gu, Seoul (KR)**

(74) Representative: **Neill, Alastair William et al**
**APPLEYARD LEES**
**15 Clare Road**
**Halifax, West Yorkshire HX1 2HY (GB)**

(56) References cited:
**EP-A- 0 577 350         EP-A- 0 666 695**
**US-A- 5 359 676**

• **CHUNG J KUO ET AL: "ADAPTIVE POSTPROCESSOR FOR BLOCK ENCODED IMAGES" IEEE TRANSACTIONS ON CIRCUITS AND SYSTEMS FOR VIDEO TECHNOLOGY, vol. 5, no. 4, 1 August 1995 (1995-08-01), pages 298-304, XP000528331 ISSN: 1051-8215**
• **HIROYUKI OKADA ET AL: "AN ADAPTIVE IMAGE QUALITY IMPROVEMENT METHOD FOR DCT CODING SCHEMES" PROCEEDINGS OF THE PICTURE CODING SYMPOSIUM (PCS), LAUSANNE, MAR. 17 - 19, 1993,17 March 1993 (1993-03-17), pages 13.20/A-13.20/B, XP000346472 SWISS FEDERAL INSTITUTE OF TECHNOLOGY**

**Description**

The present invention relates to a signal adaptive postprocessing system for reducing blocking effects and ringing noise, and more particularly, though not exclusively, to a system for adaptively attenuating blocking effects and ringing noise appearing at a decompressed image when highly efficient compressed image data is decompressed.

Most of picture coding standards including H.263 of International Telecommunication Union (ITU) and MPEG-1 and MPEG-2 of Organization for Standardization (ISO), use the block-based processing for motion estimation and discrete cosine transform (DCT). This block-based processing induces the well-known blocking effects and the ringing noise, in particular, when an image is highly compressed. The typical blocking effects are the grid noise in the monotone area and the staircase noise along the image edges. The blocking effects induce a viewer who views a decompressed image displayed on a screen to feel the boundary between the blocks in the visual sense. The ringing noise induces sinusoidal traces on the practical edges of an image.

The publication "Adaptive Postprocessor for Block Encoded Images" IEEE Transaction on Circuits and Systems for Video Technology, Vol. 5, no. 4, 1 August 1995, pp 298-304 (Chung J Kno et al) discloses a filtering method including the pre-characterising features of claim 1.

US-A-5,359,676 (Fan) discloses a method of improving the appearance of an ADCT decompressed document image while maintaining fidelity with an original document image from which it is derived, the method including the decompression steps of: a) receiving the encoded quantized transform coefficient blocks for the original image; b) removing any lossless encoding of the quantized transform coefficient blocks for the original image c) multiplying each quantized transform coefficient in a block by a corresponding quantizing value from the quantization table to obtain a block of received transform coefficients; d) recovering the image by applying an inverse transform operation to the received transform coefficients e) i) adaptively selecting on a block by block basis a filter threshold ii) detecting edges within the block and forming a mapping of the edges occurring, and iii) iteratively filtering for a predetermined number of times the image with a smooth filter, the filtering operation controlled by the derived edge map so as not to operate on image edges; f) comparing each block of new transform coefficients to a corresponding block of received transform coefficients and the selected quantization table, to determine whether the filtered recovered image is derivable from the original image; and g) upon the determination transferring the filtered recovered image to an output buffer.

It is an aim of preferred embodiments of the present invention to provide a method for largely reducing blocking effects and ringing noise caused by a decompressed image by adaptively filtering decompressed image data according to edges obtained from the decompressed image.

According to the present invention in a first aspect, there is provided a signal adaptive filtering method for reducing blocking effects of a decompressed digital image, said signal adaptive filtering method comprising the steps of :

(a) generating binary edge map information by globally thresholding and locally thresholding the decompressed image;

(b) judging whether the binary edge map information within a filter window corresponding to respective pixels is either homogeneous area or edge area, by using the binary edge map information belonging to a predetermined size of the filter window;

(c) generating a filtered pixel value corresponding to a respective pixel using the filter window which has a predetermined first weight factors relating to the homogeneous area, when the binary edge map information is judged as the homogeneous area in the said step (b);

(d) altering the predetermined second weight factors according to a binary edge map information included in the filter window or corresponding to the respective pixel when the binary edge map information is judged as the edge area in the said step (b); and

(e) generating a filtered pixel value corresponding to the respective pixel, using the filter window which has altered second weight factors in said step(d);

   characterised in that said step (a) comprises the steps of:

(a1) generating a gradient image corresponding to the decompressed image;

(a2) generating global edge map information which is composed of edge values corresponding to the respective pixels of the decompressed image, by comparing a predetermined first thresholding value with a gradient value corresponding to the respective pixels within the gradient image;

(a3)generating local edge map information which is composed of edge values corresponding to the respective pixels of the decompressed image, by comparing gradient values within a predetermined size of a plurality of individual blocks into which the decompressed image is divided, with a second thresholding value, equal to a fraction of the first thresholding value, depending on the variance of the gradient within said block, calculated for each of said plurality of blocks; and

(a4)logically summing an edge value in the global edge map information and a corresponding edge value in the local edge map information, and generating binary edge map information.

Further features of the present invention are set out in the claims appended hereto.

The preferred embodiments of the present invention are described, by way of example only, with reference to the drawings that follow; wherein:

Figure 1 is a block diagram showing a signal adaptive postprocessing apparatus for reducing blocking effects and ringing noise according to a preferred embodiment of the present invention;

Figure 2A shows a filter window for a 5x5 filter proposed in the present invention;

Figure 2B shows the weight factors for the 5x5 average filter;

Figure 2C shows the weight factors for the 5x5 weighted filter;

Figure 3 shows the binary edge map produced in the binary edge mapper of Figure 1;

Figure 4A shows a filter window for a 3x3 filter proposed in the present invention;

Figure 4B shows the weight factors for the 3x3 average filter; and

Figure 4C shows the weight factors for the 3x3 weighted filter.

A preferred embodiment of the present invention will be described below in more detail with reference to the accompanying drawings :-

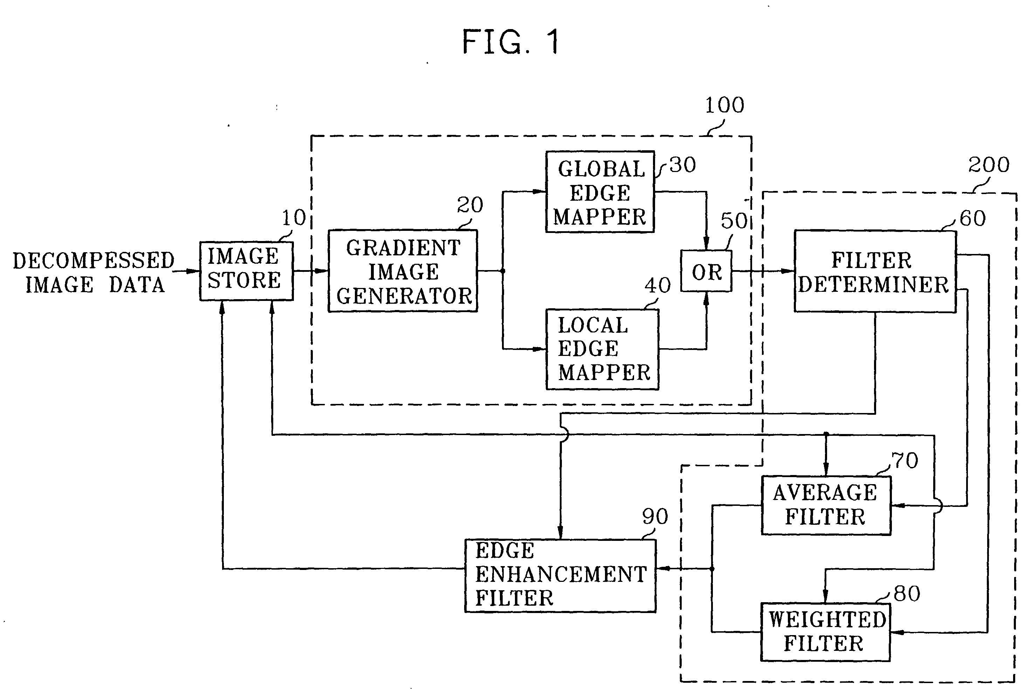

In Figure 1, a signal adaptive postprocessing apparatus according to a preferred embodiment of the present invention includes an image store 10, an image edge mapper portion 100 and a signal adaptive filter portion 200. The image store 10 stores decompressed image data, in more detail, data obtained by performing an inverse processing of a source encoding process including motion estimation and discrete cosine transform. The binary edge mapper portion 100 includes a gradient image generator 20, a global edge mapper 30, a local edge mapper 40 and a logic sum unit 50, which generates binary edge map information on which global edges and local edges of a decompressed image are reflected. The signal adaptive filter portion 200 includes a filter determiner 60, an average filter 70, and a weighted filter 80, which filters the decompressed image data using one of the average filter and the weighted filter to be described below based on the binary edge map information. The grid noise and the staircase noise is mitigated in the signal adaptive filter portion 200. The apparatus of Figure 1 further comprises an edge enhancement filter 90 for enhancing the edge information of the signal-adaptive-filtered image and reducing the staircase noise.

The gradient image generator 20 generates gradient image data using the image data stored in the image store 10. The gradient image generator 20 applies a vertical Sobel gradient operator and a horizontal Sobel gradient operator to the decompressed image, that is, the image data stored in the image store 10, to generate a gradient image. The gradient image data obtained by the gradient image generator 20 is supplied to the global edge mapper 30 and the local edge mapper 40.

The global edge mapper 30 produces a global edge map with respect to the whole image, and the local edge mapper 40 divides the whole image into blocks having a respectively predetermined magnitude and produces a local edge map with respect to each block. In more detail, the global edge mapper 20 calculates an edge value corresponding to each pixel using the following equation (1).

$$\text{If } | \nabla_h | + | \nabla_v | \geq T_g, \text{ edge(i,j)=1}$$

$$\text{Otherwise,} \qquad \text{edge}(i,j)=0 \tag{1}$$

Here $\nabla_h$ and $\nabla_v$ represent a horizontal gradient image and a vertical gradient image at location (i,j) obtained by the horizontal Sobel gradient operator and the vertical Sobel gradient operator, respectively. $|\nabla_h| + |\nabla_v|$ represents a gradient value at location (i,j), and Tg is a global threshold value which is 100 when each pixel of an image has 256 gray levels. Therefore, if a gradient value corresponding to a pixel is larger than or equal to the global threshold value Tg the global edge mapper 30 determines an edge value corresponding to the pixel as "1". On the other hand, if a gradient value corresponding to a pixel is smaller than the global threshold value Tg, the global edge mapper 30 determines an edge value corresponding to the pixel as "0". The global edge map information obtained by applying the above equation to the whole image is supplied to the logic sum unit 50.

The local edge mapper 40 produces a local edge map using the output of the gradient image generator 20. The local edge mapper 40 calculates a local threshold value with respect to each of all $M_1 \times M_2$ blocks of the gradient image, and calculates local edge values with respect to all gradient values contained in corresponding block using the calculated local threshold value. According to the MPEG standard, the block-based processing techniques such as DCT transform and quantization process signals with respect to an 8x8 block containing basically 8x8 pixels. Thus, the local edge mapper 40 according to one embodiment of the present invention is also designed to draw a local edge map by using an 8x8 block. However, it will be apparent to a person skilled in the art that the present invention is not limited to the block of such a size.

The local threshold value $T_n$ with respect to an n-th 8x8 block in the gradient image is defined by the following equations (2) - (4).

$$T_n = \left| 1 - \frac{\sigma_n}{m_n} \right| \times T_g \tag{2}$$

wherein,

$$\sigma_n = \sqrt{\frac{1}{N} \sum_{(i,j) \in R_n} g(i,j) - m_n^{\,2}}$$

$$m_n = \frac{1}{N} \sum_{(i,j) \in R_n} g(i,j)$$

$$\ldots \ldots (4)$$

Here, g(i,j) represents a gradient value, $R_n$ represents an n-th 8x8 block region $m_n$ and $\sigma_n$ represent a mean value and a standard deviation of an n-th 8x8 block of the gradient image, respectively. Tg represents a global threshold value and N is 64 in the case of an 8x8 block. If the n-th 8x8 block is homogeneous, a ratio $\sigma_n/m_n$ tends to be "0", with the result that $T_n$ becomes very close to $T_g$. Meanwhile, if the n-th 8x8 block is part of a complicated image, the ratio $\sigma_n/m_n$ increases. As a result, $T_n$ becomes smaller than Tg. This small $T_n$ is used in drawing a detail edge map which is not classified as a global edge by Tg, so that a local edge map can be calculated by $T_n$.

The local edge mapper 40 individually compares the local threshold value $T_n$ with respect to the n-th 8x8 block with a part of the gradient values within the block, in magnitude. Here, the part of the gradient values corresponds to the 6x6 pixels within the 8x8 block excluding the boundary pixels within the 8x8 block. If the gradient value used for drawing the local edge map is defined as described above, the detailed information is protected from blurring and the grid noise is prevented from being detected as an image edge.

If each gradient value allowable within the n-th 8x8 block region $R_n$ is larger than or equal to the local threshold value $T_n$, the local edge mapper 40 determines a local edge value corresponding to the gradient value as "1". Meanwhile, if a gradient value corresponding to a pixel is smaller than the local threshold value $T_n$, the local edge mapper 40 determines a local edge value corresponding to the gradient value as "0". The local edge mapper 40 generates local edge map information by performing a processing procedure for an 8x8 block division, local edge value calculation, and calculating a local edge value using allowable gradient values of each block, with respect to all gradient values generated by the gradient image generator 20. The generated local edge map information is supplied to the logic sum unit 50.

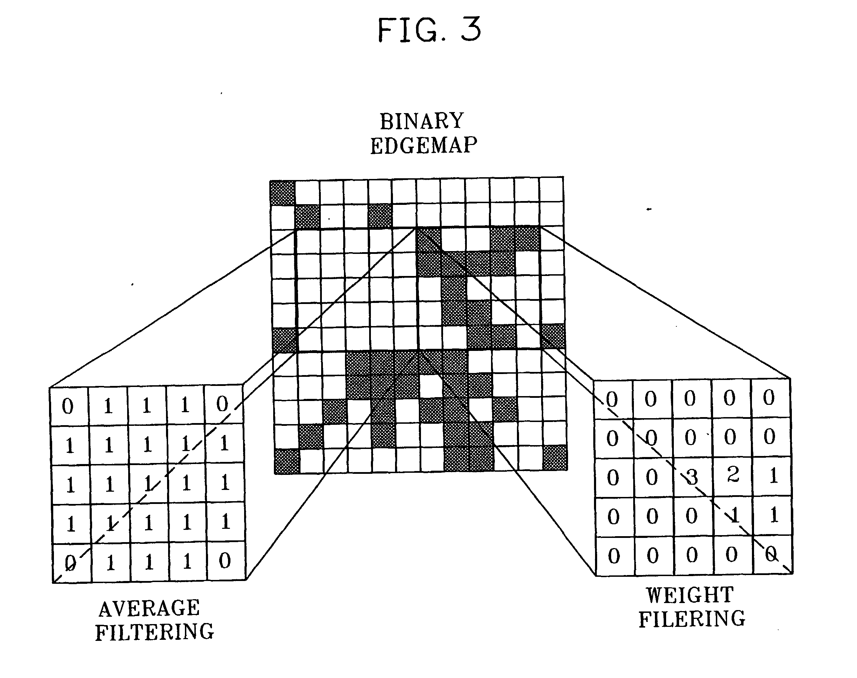

The logical OR unit 50 performs logical OR operation of the global edge map information and the local edge map information which are related each other with respect to a pixel location. The logical OR unit 50 performs a logical OR operation with respect to all global edge values on the global edge map and all local edge values on the local edge map, and outputs binary edge map information representing the result to the filter determiner 60. The binary edge map produced by the logical OR unit 50 is conceptually shown in Figure 3.

The filter determiner 60 stores the binary edge map information supplied from the logical OR unit 50. The decompressed image is classified into two areas such as an edge area and a homogeneous area by a binary edge map. For this classification, the present invention uses the filter determiner 60. The filter determiner 60 judges whether a region on the binary edge map where the filter window is located is an edge area or a homogeneous area, based on the edge values contained in the filter window having a predetermined magnitude. If it is judged as a homogeneous area, the filter determiner 60 outputs position data with respect to the central point in the filter window used for judgement, to the average filter 70. For the case in which it is judged as an edge area, the filter determiner 60 outputs the binary edge map information and position data with respect to the central point in the filter window used for judgement, to the weighted filter 80. Here, the central point represents a point where the pixel value of the point is replaced by a new value.

The average filter 70 and the weighted filter 80 according to the embodiments of the present invention use a 5x5 filter window or a 3x3 filter window, respectively. Therefore, the filter window used in the filter determiner 60 has also a 3x3 or 5x5 size. The average filter 70 and the weighted filter 80 are two-dimensional low-pass filters, which will be described below, assuming that the filters 70 and 80 are designed to match a 5x5 filter window as an example.

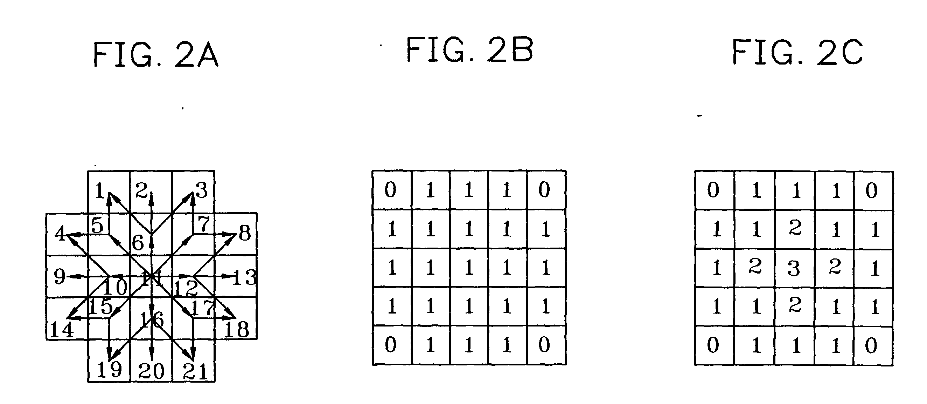

Figures 2A to 2C show the filter window and the weight factors for a 5x5 filter. Figure 2A shows a filter window for a 5x5 filter. In Figure 2A, the numerical figures represent filter coefficient (or weight) indices, in which a point where the filter coefficient index value is "11" represents the central point of the filter window. Figures 2B and 2C show the weight factors when the 5x5 filter window is used. Figure 2B shows the weight factors for the 5x5 average filter. Figure 2C shows the weight factors for the 5x5 weighted filter. It is allowable that the weight factor of "3" at the central point shown in Figure 2C is replaced by 4. The arrow lines of Figure 2A are used for determining outer neighbouring points concerning a particular edge point. Here, the edge point is a point where the edge value is "1" which is represented as shaded rectangles on the binary edge map of Figure 3.

If position data with respect to the central point is input, the average filter 70 reads the pixel values necessary to calculate the filtered pixel value of the central point from the image store 10. Then, the average filter 70 calculates the filtered pixel values using the read pixel values and the weight factors shown in Figure 2B. The calculated filtered pixel value is used as an altered pixel value with respect to the central point. The weighted filter 80 performs a filtering operation based on the binary edge map information supplied from the filter determiner 60 and the position data with respect to the central point. The operation of the weighted filter 80 will be described below in more detail.

If the central point "11" of the filter window shown in Figure 2A is an edge point, the weighted filter 80 does not perform a filtering operation for the central point. If the edge point or the edge points are positioned in the 5x5 filter window excluding the central point, the weighted filter 80 performs a filtering operation using the weight factors shown in Figure 2C. The weight factors are varied according to the positions of the edge point in the filter window to protect details of the image. If any edge is on the points 12, 7, 6, 5, 10, 15, 16 or 17 of Figure 2A, the weight factors of the edge pixel and the outer neighbour pixels are set to zero. For example, if the point 12 is an edge pixel, the points 12, 8, 13 and 18 will be outer neighbours points whose weight factors are set to zero. If the point 7 is an edge pixel, the points 7, 3 and 8 will be outer neighbour points and will be zero.

The average filter 70 and the weighted filter 80 are described below designed to be appropriate for a 3x3 filter window.

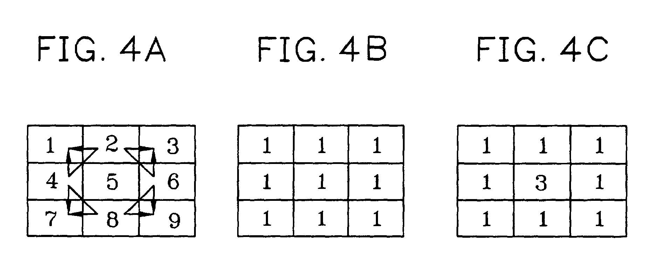

Figures 4A to 4C show the filter window and the weight factors for a 3x3 filter. Figure 4A shows a filter window for a 3x3 filter. Figure 4B shows the weight factors for the 3x3 average filter. Figure 4C shows the weight factors for the 3x3 weighted filter. It is allowable that the weight factor of "3" at the central point shown in Figure 4C is replaced by 2. In Figure 4A, a point where the filter weighted index value is "5" represents the central point of the filter window. The average filter 70 performs the same operation as the case using the 5x5 filter window having the filter weight factors shown in Figure 4B. An explanation of the operation of the average filter 70 in the case in which the 3x3 filter window is used will be omitted, since one skilled in the art can understand it well with reference to the above-described 5x5 average filter.

If the central point "5" of the filter window shown in Figure 4A is an edge point, the weighted filter 80 does not perform a filtering operation for the central point. If the edge point or the edge points are positioned in the 3x3 filter window excluding the central point, the weighted filter 80 performs a filtering operation using the weight factors shown in Figure 4C. If any edge is on the points 2 and 6, 6 and 8, 4 and 8, or 2 and 4 of Figure 4A, the weight factors of the edge pixel and the outer neighbour pixels are set to zero.

The signal adaptive filtered image data obtained by the average filter 70 and the weighted filter 80 are supplied to the image store 10. The image store 10 replaces a corresponding pixel value by the image data supplied from the average filter 70 and the weighted filter 80. If the image store 10 replaces the decompressed image data by the signal adaptive filtered image data with respect to all pixels, an image which is displayed by using the image data stored in the image store 10 has a quality of image from which blocking effects and ringing noise are remarkably reduced.

With respect to CLASS-A and CLASS-B which are using as the text sequences of MPEG-4 and H.263+, in case of a sequence of CLASS-A, a desired quality of image can be obtained by performing only a signal adaptive filtering with respect to the binary edge map information. However, in the case of a sequence of CLASS-B, a more desired quality of image can be obtained by performing an edge enhancement filtering with respect to the signal adaptive filtered image.

The edge enhancement filter 90 according to the embodiment of the present invention described herein is designed as a one-dimensional three-tap filter whose weight factor is (1,4,1). If the signal adaptive filtered signal produced by the average filter 70 and the weighted filter 80 is applied, the edge enhancement filter 90 determines the direction of the edge as one of the 45 °, 135 °, 90 ° and 0 ° from the signal adaptive filtered image. For such determination, the edge enhancement filter 90 uses the binary edge map information stored in the filter determiner 60. The edge enhancement filter 90 performs a one-dimensional filtering by using the filter weight factors with respect to all edge points of the signal adaptive filtered image whose direction has been determined. The edge information is reinforced and the staircase noise is reduced by the edge enhancement filter 90. The filtered image data in the edge enhancement filter 90 is supplied to the image store 10. The image store 10 performs the same operation as the image data supplied from the average filter 70 and the weighted filter 80. Thus, when the edge enhancement filter is additionally used, the blocking effects are reduced and the edge enhanced image can be provided to viewers.

The CLASS-A and CLASS-B sequences which are encoded and decoded in H.263 are used for evaluating the postprocessing system proposed in the present invention. The 3x3 signal adaptive filter is applied to the CLASS-A sequence which is encoded and decoded in H.263, while the 3x3 signal adaptive filter and the 5x5 signal adaptive filter are applied to the CLASS-B sequence. In the CLASS-B sequence, the 3x3 filtered image has a higher peak signal to noise ratio (PSNR) than the 5x5 filtered image. However, the subjective quality of the 5x5 filtered image is better than the 3x3 filtered image. Therefore, the 5x5 signal adaptive filtering and the one-dimensional edge enhancement filtering are desirable to the image of the CLASS-B even though the PSNR is degraded somewhat. Tables 1 and 2 show the decompressed sequences and various postprocessing sequences. Table 1 below shows the test result of the CLASS-A sequences, in which (a) is the result of the 3x3 signal adaptive filter proposed in the present invention. Table 2 below shows the test result of the CLASS-B sequences, in which (a) is the result of the 3x3 signal adaptive filter, (b) is the result of the 5x5 signal adaptive filter and (c) is result of the 5x5 signal adaptive filter and the edge enhancement filter.

Table 1

| Bit Rate Spatial Resolution | Sequence | H.263 (PSNR) | (a) |
|---|---|---|---|
| Frame Rate | | | |
| 10kbps, QCIF, 5Hz | Akiyo | 34.81 | 35.06 |
| | Hall monitor | 32.65 | 32.88 |
| | Container ship | 31.97 | 32.00 |
| | Mother & daughter | 33.81 | 33.93 |
| 24kbps, QCIF, 10Hz | Akiyo | 36.18 | 36.25 |
| | Hall monitor | 33.68 | 33.88 |
| | Container ship | 33.36 | 33.32 |
| | Mother & daughter | 35.18 | 35.18 |

Table 2

| Spatial Resolution Frame Rate | Bit Rate | Sequence | H.263 (PSNR) | (a) | (b) | (c) |
|---|---|---|---|---|---|---|
| CIF, 7.5Hz | 48kbps 77kbps 70kbps 48kbps | News Foreman Coastguard Silent voice | 32.00 29.46 26.35 31.55 | 32.13 29.53 26.35 31.55 | 32.06 29.54 26.31 31.47 | 31.97 29.53 26.27 31.46 |
| CIF 15Hz | 112kbps 112kbps 114kbps 112kbps | News Foreman Coastguard Silent voice | 34.42 30.06 26.71 32.89 | 34.59 30.12 26.71 33.04 | 34.46 30.12 26.68 32.90 | 34.27 30.07 26.62 32.83 |

As described above, the system according to the described embodiment of the present invention improves a quality of the block-based decompressed image. The described embodiment of the present invention uses signal adaptive filtering to reduce blocking effects without degradation of the image details. The signal adaptive filtering is based on the edge information generated by a gradient calculation and an adaptive threshold scheme. The objective performance is measured by the PSNR. The measured PSNR shows a small increase in CLASS-A and CLASS-B sequences when the 3x3 signal adaptive filter is adopted. However, the PSNR does not fully reflect the enhancement of the image quality in the psychovisual viewpoint. Even though the small fraction of the PSNR is improved, a definite improvement in subjective quality can be observed. Therefore, the postprocessing system proposed in the described embodiment of the present invention effectively reduces the blocking effects and the ringing noise, and well preserves and enhances block-based decoded images without any increase in the bitrates.

While only certain embodiments of the invention have been specifically described herein, it will be apparent that numerous modifications may be made thereto without departing from the to be of the invention.


**Claims**

1. A signal adaptive filtering method for reducing blocking effects and ringing noise of a decompressed digital image, said signal adaptive filtering method comprising the steps of

   (a) generating binary edge map information by globally thresholding and locally thresholding the decompressed image;
   (b) judging whether the binary edge map information within a filter window corresponding to respective pixels is either homogeneous area or edge area, by using the binary edge map information belonging to a predetermined size of the filter window;
   (c) generating a filtered pixel value corresponding to a respective pixel using the filter window which has a predetermined first weight factors relating to the homogeneous area, when the binary edge map information is judged as the homogeneous area in said step (b);
   (d) altering the predetermined second weight factors according to a binary edge map information corresponding to the respective pixel when the binary edge map information is judged as the edge area in said step (b); and
   (e) generating a filtered pixel value corresponding to the respective pixel, using the filter window which has altered second weight factors in said step (d);

   **characterised in that** said step (a) comprises the steps of:

   (a1) generating a gradient image corresponding to the decompressed image;

   (a2) generating global edge map information which is composed of edge values corresponding to the respective pixels of the decompressed image, by comparing a predetermined first thresholding value with a gradient value corresponding to the respective pixels within the gradient image;

(a3)generating local edge map information which is composed of edge values corresponding to the respective pixels of the decompressed image, by comparing gradient values within a predetermined size of a plurality of individual blocks into which the decompressed image is divided, with a second thresholding value, equal to a fraction of the first thresholding value, depending on the variance of the gradient within said block, calculated for each of said plurality of blocks; and

(a4)logically summing an edge value in the global edge map information and a corresponding edge value in the local edge map information, and generating binary edge map information.

2.  A signal adaptive filtering method according to claim 1, wherein said step (a3) calculates the second thresholding value corresponding to respective blocks using the following equation :

$$T_n = |1 - \frac{\sigma_n}{m_n}| \times T_g \qquad (2)$$

wherein,

$$\sigma_n = \sqrt{\frac{1}{N} \sum_{(i,j) \in Rn} g(i,j) - m_n^{\,2}}$$

$$m_n = \frac{1}{N} \sum_{(i,j) \in R_n} g(i,j)$$

$$\ldots \ldots (4)$$

Here, g(i,j) represents a gradient value, $R_n$ represents an n-th 8x8 block region, $m_n$ and $\sigma_n$ represent an average deviation and a standard deviation of an n-th 8x8 block of the gradient image, N represents a size of the n-th block, and Tg represents a global threshold value.

3.  A signal adaptive filtering method according to claim 2, wherein said step (a3) compares the gradient values corresponding to 6x6 pixels within a 8x8 block excluding boundary pixels within the 8x8 block with the corresponding second thresholding value.

4.  A signal adaptive filtering method according to any preceding claim, wherein the more said predetermined second weight factors move from the centre of the filter window to the boundary thereof, the less said predetermined second weight factors have.

5.  A signal adaptive filtering method according to claim 4, wherein said filter window has a 5x5 size.

6.  A signal adaptive filtering method according to claim 5, wherein said step (c) uses a filter window in which first weight factors positioned at four corners are "0" in magnitude, and those positioned at the remaining points are "1".

7.  A signal adaptive filtering method according to claim 5, wherein a second weight factor located in the centre of the said filter window is "3" in magnitude, and second weight factors located at the others thereof are less than "2", wherein the closer the second weight factors are to boundary of the filter window, the less the second weight factors become.

8. A signal adaptive filtering method according to claim 5, wherein a second weight factor located in the centre of said filter window is "4" in magnitude, and second weight factors located at the others thereof are less than "2", wherein the closer the second weight factors are to edge points of the filter window, the less the second weight factors become.

9. A signal adaptive filtering method according to any one of claims 1-4, wherein said step (d) comprises the step of changing, to zero, the second weight factors which are located at the edge point and outer neighbouring points of the edge point, based on the edge point within the filter window.

10. A signal adaptive filtering method according to any one of claims 1-4, wherein said filter window has a 3x3 size.

11. A signal adaptive filtering method according to claim 10, wherein said step (c) uses the filter window having the same magnitude of first weight factors.

12. A signal adaptive filtering method according to claim 11, wherein said first weight factor is "1".

13. A signal adaptive filtering method according to claim 10, wherein a second weight factor located in the center of said filter window is "2" in magnitude, and second weight factors located at the others thereof are "1".

14. A signal adaptive filtering method according to claim 10, wherein a second weight factor located in the centre of said filter window is "3" in magnitude, and second weight factors located at the others thereof are "1".

15. A signal adaptive filtering method according to claim 10, wherein said step (d) comprises the step of resetting, as zero, second weight factors corresponding to positions put on a diagonal line and second weight factors corresponding to positions placed on the diagonal line, if the binary edge map information which corresponds to positions on the diagonal lines among the positions excluding the central points of the 3x3 filter window is represented as all edge points.

16. A signal adaptive filtering method according to any preceding claim, wherein said step (e) performs no filtering operation with regard to corresponding pixels if the central point within said filter window is an edge point.


**Patentansprüche**

1. Signaladaptives Filterverfahren zum Verringern von Blockeffekten und Überschwingrauschen eines entkomprimierten digitalen Bildes, wobei das signaladaptive Filterverfahren die folgenden Schritte umfasst:

(a) Erzeugen binärer Kantenabbudungsinformationen durch globalen Schwellenwertvergleich und lokalen Schwellenwertvergleich des entkomprimierten Bildes;

(b) unter Verwendung der binären Kantenabbildungsinformationen, die zu einer vorgegebenen Größe des Filterfensters gehören, Feststellen, ob die binären Kantenabbildungsinformationen innerhalb eines Filterfensters, das jeweiligen Pixeln entspricht, ein homogener Bereich oder ein Kantenbereich sind;

(c) Erzeugen eines gefilterten Bildpunktwertes, der einem jeweiligen Bildpunkt entspricht, unter Verwendung des Filterfensters, das vorgegebene erste Gewichtsfaktoren bezüglich des homogenen Bereiches aufweist, wenn die binären Kantenabbildungsinformationen in Schritt (b) als der homogene Bereich festgestellt werden;

(d) Ändem der vorgegebenen zweiten Gewichtsfaktoren entsprechend binären Kantenabbildungsinformationen, die dem jeweiligen Bildpunkt entsprechen, wenn die binären Kantenabbildungsinformationen in Schritt (b) als der Kantenbereich festgestellt werden; und

(e) Erzeugen eines gefilterten Bildpunktwertes, der dem jeweiligen Bildpunkt entspricht, unter Verwendung des Filterfensters, das in Schritt (d) geänderte zweite Gewichtsfaktoren aufweist;

**dadurch gekennzeichnet, dass** Schritt (a) die folgenden Schritte umfasst:

(a1) Erzeugen eines Gradientenbildes, das dem entkomprimierten Bild entspricht;

(a2) Erzeugen globaler Kantenabbildungsinformationen, die aus Kantenwerten bestehen, die den jeweiligen Pixeln des entkomprimierten Bildes entsprechen, durch Vergleichen eines vorgegebenen ersten Schwellenwertes mit einem Gradientenwert, der den jeweiligen Pixeln in dem Gradientenbild entspricht;

(a3) Erzeugen lokaler Kantenabbildungsinformationen, die aus Kantenwerten bestehen, die den jeweiligen Pixeln des entkomprimierten Bildes entsprechen, durch Vergleichen von Gradientenwerten innerhalb einer vorgegebenen Größe einer Vielzahl einzelner Blöcke, in die das entkomprimierte Bild unterteilt ist, mit einem zweiten Schwellenwert, der einem Bruchteil des ersten Schwellenwertes entspricht, in Abhängigkeit von der Varianz des Gradienten innerhalb des Blocks, die für jeden der Vielzahl von Blöcken berechnet wird; und

(a4) logisches Summieren eines Kantenwertes in den globalen Kantenabbildungsinformationen und eines entsprechenden Kantenwertes in den lokalen Kantenabbildungsinformationen und Erzeugen von binären Kantenabbildungsinformationen.

2. Signaladaptives Filterverfahren nach Anspruch 1, wobei in Schritt (a3) der zweite Schwellenwert, der jeweiligen Blöcken entspricht, unter Verwendung der folgenden Gleichung berechnet wird:

$$T_n = |1 - \frac{\sigma_n}{m_n}| \times T_g \qquad (2)$$

wobei

$$\sigma_n = \sqrt{-\sum_{(i,j)\in R_n} g / i, j) - m_n^2}$$

$$m_n = \frac{1}{N} \sum_{(i,j)\in R_n} g(i,j) \qquad \dots\dots (4)$$

wobei $g(i,j)$ einen Gradientenwert darstellt, $R_n$ einen n-ten 8x8-Blockbereich darstellt, $m_n$ und $\sigma_n$ eine durchschnittliche Abweichung und eine Standardabweichung eines n-ten 8x8-Blocks des Gradientenbildes darstellen, N eine Größe des n-ten Blocks darstellt, und $T_g$ einen globalen Schwellenwert darstellt.

3. Signaladaptives Filterverfahren nach Anspruch 2, wobei in dem Schritt (a3) die Gradientenwerte, die 6x6-Pixeln innerhalb eines 8x8-Blocks, der Randbildpunkte innerhalb des 8x8-Blocks ausschließt, entsprechen, mit dem entsprechenden zweiten Schwellenwert verglichen werden.

4. Signaladaptives Filterverfahren nach einem der vorangehenden Ansprüche, wobei die vorgegebenen zweiten Gewichtsfaktoren um so weniger haben, je mehr sich die vorgegebenen zweiten Gewichtsfaktoren von der Mitte des Filterfensters zum Rand desselben bewegen.

5. Signaladaptives Filterverfahren nach Anspruch 4, wobei das Filterfenster eine Größe von 5x5 hat.

6. Signaladaptives Filterverfahren nach Anspruch 5, wobei in dem Schritt (c) ein Filterfenster verwendet wird, in dem erste Gewichtsfaktoren, die an vier Ecken angeordnet sind, einen Betrag "0" haben, und die an den verbleibenden Punkten angeordneten "1" betragen.

7. Signaladaptives Filterverfahren nach Anspruch 5, wobei ein zweiter Gewichtsfaktor, der sich in der Mitte des Filterfensters befindet, einen Betrag "3" hat, und zweite Gewichtsfaktoren, die sich an den anderen befinden, kleiner sind als "2", wobei die zweiten Gewichtsfaktoren um so geringer werden, je näher die zweiten Gewichtsfaktoren am Rand des Filterfensters liegen.

**8.** Signaladaptives Filterverfahren nach Anspruch 5, wobei ein zweiter Gewichtsfaktor, der sich in der Mitte des Filterfensters befindet, einen Betrag "4" hat, und zweite Gewichtsfaktoren, die sich an den anderen befinden, kleiner sind als "2",
wobei die zweiten Gewichtsfaktoren um so geringer werden, je näher die zweiten Gewichtsfaktoren an Kantenpunkten des Filterfensters liegen.

**9.** Signaladaptives Filterverfahren nach einem der Ansprüche 1-4, wobei der Schritt (d) den Schritt des Ändems der zweiten Gewichtsfaktoren, die sich an dem Kantenpunkt und äußeren benachbarten Punkten des Kantenpunkts befinden, auf Null auf Basis des Kantenpunktes innerhalb des Filterfensters umfasst.

**10.** Signaladaptives Filterverfahren nach einem der Ansprüche 1-4, wobei das Filterfenster eine Größe von 3x3 hat.

**11.** Signaladaptives Filterverfahren nach Anspruch 10, wobei in dem Schritt (c) das Filterverfahren eingesetzt wird, das die gleiche Größer erster Gewichtsfaktoren aufweist.

**12.** Signaladaptives Filterverfahren nach Anspruch 11, wobei der erste Gewichtsfaktor "1" beträgt.

**13.** Signaladaptives Filterverfahren nach Anspruch 10, wobei ein zweiter Gewichtsfaktor, der sich in der Mitte des Filterfensters befindet, einen Betrag "2" hat und zweite Gewichtsfaktoren, die sich an den anderen befinden, "1" betragen.

**14.** Signaladaptives Filterverfahren nach Anspruch 10, wobei ein zweiter Gewichtsfaktor, der sich in der Mitte des Filterfensters befindet, einen Betrag "3" hat und zweite Gewichtsfaktoren, die sich an den anderen befinden, "1" betragen.

**15.** Signaladaptives Filterverfahren nach Anspruch 10, wobei der Schritt (d) den Schritt des Zurücksetzens zweiter Gewichtsfaktoren, die Positionen entsprechen, die auf eine diagonale Linie gesetzt sind, und zweiter Gewichtsfaktoren, die dem äußeren Nachbar von Positionen entsprechen, die auf die diagonale Linie gelegt sind, auf Null umfasst, wenn die binären Kantenabbildungsinformationen, die Positionen auf den diagonalen Linien von den Positionen entsprechen, die die mittleren Punkte des 3x3-Filterfensters ausschließen, sämtlich als Kantenpunkte dargestellt sind.

**16.** Signaladaptives Filterverfahren nach einem der vorangehenden Ansprüche, wobei in dem Schritt (e) kein Filtervorgang bezüglich jeweiliger Bildpunkte ausgeführt wird, wenn der mittlere Punkt in dem Filterfenster ein Kantenpunkt ist.

**Revendications**

**1.** Procédé de filtrage adaptatif de signaux pour réduire des effets de blocage et le bruit d'ondulation d'une image numérique décomprimée, ledit procédé de filtrage adaptatif de signaux comprenant les étapes consistant à:

(a) produire une information binaire de carte de bord par application d'un seuil global et application d'un seuil local à l'image décomprimée;
(b) évaluer si l'information binaire de la carte de bord à l'intérieur d'une fenêtre de filtre correspondant à des pixels respectifs est une zone homogène ou une zone de bord, moyennant l'utilisation de l'information binaire de carte de bord associée à une taille prédéterminée de la fenêtre de filtre;
(c) produire une valeur de pixel filtrée correspondant à un pixel respectif en utilisant la fenêtre de filtre qui possède un premier facteur de pondération prédéterminé associé à la zone homogène, lorsque l'information binaire de la carte de bord est évaluée en tant que zone homogène lors de ladite étape(b);
(d) modifier les seconds facteurs de pondération prédéterminés conformément à une information binaire de carte de bord correspondant au pixel respectif lorsque l'information binaire de carte de bord est évaluée comme étant la zone de bord lors de ladite étape (b); et
(e) produire une valeur de pixel filtrée correspondant au pixel respectif, en utilisant la fenêtre de filtre qui possède des seconds facteurs de pondération modifiés lors de ladite étape (d);

**caractérisé en ce que** ladite étape (a) comprend les étapes consistant à:

(a1) produire une image de gradient correspondant à l'image décomprimée;

(a2) produire une information globale de carte de bords, qui est constituée par des valeurs de bord correspondant aux pixels respectifs de l'image décomprimée, par comparaison d'une première valeur de seuil prédéterminée à une valeur de gradient correspondant aux pixels respectifs dans l'image de gradient;

(a3) produire une information locale de carte de bord, qui est constituée par des valeurs de bord correspondant aux pixels respectifs de l'image décomprimée, par comparaison de valeurs de gradient dans une taille prédéterminée d'une pluralité de blocs individuels, en lesquels l'image décomprimée est divisée, à une seconde valeur de seuil, égale à une fraction de la première valeur de seuil, en fonction de la variance du gradient dans ledit bloc, calculée pour chacun de la pluralité de blocs; et

(a4) additionner logiquement une valeur de bord dans l'information globale de la carte de bord et une valeur de bord correspondante dans l'information locale de la carte de bord, et produire une information binaire de la carte de bord.

2. Procédé de filtrage adaptatif de signaux selon la revendication 1, selon lequel ladite étape (a3) calcule la secondé valeur de seuil correspondant à des blocs respectifs en utilisant l'équation suivante:

$$T_n = |1 - \frac{\sigma_n}{m_n}| \times T_g \qquad (2)$$

avec

$$\sigma_n = \sqrt{\frac{1}{N} \sum_{(i,j) \in R_n} g(i,j) - m_n^2}$$

$$m_n = \frac{1}{N} \sum_{(i,j) \in R_n} g(i,j)$$

g(i,j) représentant une valeur de gradient, $R_n$ une n-ème région de 8x8 blocs, $m_n$ et $\sigma_n$ désignant un écart moyen et un écart-type d'un n-ème bloc 8x8 de l'image de gradient, N une taille du n-ème bloc et Tg une valeur de seuil globale.

3. Système de filtrage adaptatif de signaux selon la revendication 2, dans lequel ladite étape (a3) compare les valeurs de gradient correspondant à 6x6 pixels à l'intérieur d'un bloc 8x8 à l'exclusion de pixels limites dans le bloc 8x8, à la seconde valeur de seuil correspondante.

4. Système de filtrage adaptatif de signaux selon l'une quelconque des revendications précédentes, selon lequel plus lesdits seconds facteurs de pondération prédéterminés s'écartent du centre de la fenêtre de filtre en direction de la limite de cette fenêtre, plus lesdits seconds facteurs de pondération prédéterminés sont faibles.

5. Système de filtrage adaptatif de signaux selon la revendication 4, selon lequel ladite fenêtre de filtre possède une taille 5x5.

6. Procédé de filtrage adaptatif de signaux selon la revendication 5, selon lequel ladite étape (c) utilise une fenêtre de filtre, dans laquelle les premiers facteurs de pondération positionnés aux quatre coins ont une amplitude "0" et ceux positionnés aux autres points on une amplitude "1".

7. Procédé de filtrage adaptatif de signaux selon la revendication 5, selon lequel un second facteur de pondération situé au centre de ladite fenêtre de filtre possède une amplitude "3" et des seconds facteurs de pondération situés au niveau d'autres endroits de cette fenêtre sont inférieurs à "2", et plus les seconds facteurs de pondération sont proches de la limite de la fenêtre de filtre, plus les seconds facteurs de pondération sont faibles.

8. Procédé de filtrage adaptatif de signaux selon la revendication 5, selon lequel un second facteur de pondération situé au centre de ladite fenêtre de filtre possède une amplitude "4", et des seconds facteurs de pondération situés en d'autres emplacements de la fenêtre sont inférieurs à "2", et plus les seconds facteurs de pondération sont proches de points de bord de la fenêtre de filtre, plus les seconds facteurs de.pondération diminuent.

9. Procédé de filtrage adaptatif de signaux selon l'une quelconque des revendications 1 à 4, selon lequel ladite étape (d) comprend l'étape consistant à modifier, à zéro, les seconds facteurs de pondération qui sont situés au niveau du point du bord et au niveau de points extérieurs voisins du point du bord, sur la base du point du bord à l'intérieur de la fenêtre de filtre.

10. Procédé de filtrage adaptatif de signaux selon l'une quelconque des revendications 1 à 4, dans lequel ladite fenêtre de filtre possède une taille 3x3.

11. Procédé de filtrage adaptatif de signaux selon la revendication 10, selon lequel ladite étape (c) utilise la fenêtre de filtre, dans laquelle un premier facteur de pondération possède la même amplitude.

12. Procédé de filtrage adaptatif de signaux selon la revendication 11, selon lequel ledit premier facteur de pondération est "1".

13. Procédé de filtrage adaptatif de signaux selon la revendication 10, selon lequel un second facteur de pondération situé au centre de ladite fenêtre de filtre possède une amplitude "2", et des seconds facteurs de pondération situés aux autres endroits de la fenêtre ont l'amplitude "1".

14. Procédé de filtrage adaptatif de signaux selon la revendication 10, selon lequel un second facteur de pondération situé au centre de ladite fenêtre de filtre possède une amplitude "3", et des seconds facteurs de pondération situés aux autres emplacements de la fenêtre ont l'amplitude "1".

15. Procédé de filtrage adaptatif de signaux selon la revendication 10, selon lequel ladite étape "d" comprend l'étape de remise à l'état initial, comme par exemple la remise à zéro, de seconds facteurs de pondération correspondant à des positions situées sur une droite diagonale, et le second facteur de pondération correspondant au voisinage extérieur de positions disposées sur la droite diagonale, si l'information binaire de la carte de bord, qui correspond à des positions situées sur les droites diagonales entre les positions à l'exclusion des points centraux de la fenêtre de filtre 3x3 est représentée sous 1a forme de tous les points de bord.

16. Procédé de filtrage adaptatif de signaux selon l'une quelconque des revendications précédentes, selon lequel ladite étape (e) n'exécute aucune opération de filtrage en rapport avec des pixels correspondants si le point central à l'intérieur de ladite fenêtre de filtre est un point de bord.

FIG. 1

DECOMPESSED IMAGE DATA → IMAGE STORE (10) → GRADIENT IMAGE GENERATOR (20)

GLOBAL EDGE MAPPER (30)

LOCAL EDGE MAPPER (40)

OR (50)

100

FILTER DETERMINER (60)

200

AVERAGE FILTER (70)

WEIGHTED FILTER (80)

EDGE ENHANCEMENT FILTER (90)

EP 0 797 349 B1

## FIG. 2A

| | 1 | 2 | 3 | |
|---|---|---|---|---|
| 4 | 5 | 6 | 7 | 8 |
| 9 | 10 | 11 | 12 | 13 |
| 14 | 15 | 16 | 17 | 18 |
| | 19 | 20 | 21 | |

## FIG. 2B

| 0 | 1 | 1 | 1 | 0 |
|---|---|---|---|---|
| 1 | 1 | 1 | 1 | 1 |
| 1 | 1 | 1 | 1 | 1 |
| 1 | 1 | 1 | 1 | 1 |
| 0 | 1 | 1 | 1 | 0 |

## FIG. 2C

| 0 | 1 | 1 | 1 | 0 |
|---|---|---|---|---|
| 1 | 1 | 2 | 1 | 1 |
| 1 | 2 | 3 | 2 | 1 |
| 1 | 1 | 2 | 1 | 1 |
| 0 | 1 | 1 | 1 | 0 |

FIG. 3

BINARY
EDGEMAP

WEIGHT
FILERING

AVERAGE
FILTERING

# FIG. 4A

| 1 | 2 | 3 |
|---|---|---|
| 4 | 5 | 6 |
| 7 | 8 | 9 |

# FIG. 4B

| 1 | 1 | 1 |
|---|---|---|
| 1 | 1 | 1 |
| 1 | 1 | 1 |

# FIG. 4C

| 1 | 1 | 1 |
|---|---|---|
| 1 | 3 | 1 |
| 1 | 1 | 1 |